# FASCICULE DE BREVET EUROPEEN

(11) **EP 2 648 961 B1**
(45) Date de publication et mention de la délivrance du brevet: **01.10.2014**
(21) Numéro de dépôt: 11804723.2
(22) Date de dépôt: 02.12.2011
(51) Int. Cl.: B62D 3/12

(54) **BUTEE DE LIMITATION DE COURSE DE LA CREMAILLERE DE DIRECTION D'UN VEHICULE AUTOMOBILE**
ENDANSCHLAG ZUR WEGBEGRENZUNG DER ZAHNSTANGE EINES KRAFTFAHRZEUGS
END STOP LIMITING THE TRAVEL OF THE STEERING RACK OF A MOTOR VEHICLE

(30) Priorité: 06.12.2010 FR 1060107
(43) Date de publication de la demande: 16.10.2013
(73) Titulaire: Peugeot Citroën Automobiles SA, 78140 Vélizy Villacoublay (FR)
(72) Inventeur: LABROUE, Stephane, F-95110 Sannois (FR)
(74) Mandataire: Rosenberg, Muriel Sylvie
(86) Numéro de dépôt international: PCT/FR2011/052847
(87) Numéro de publication internationale: WO 2012/076788

(56) Documents cités:
- DE-A1- 10 045 820
- US-B1- 6 257 602

## Description

La présente invention concerne une butée de limitation de course de la crémaillère de direction d'un véhicule automobile. Elle concerne également un procédé de limitation de la course de la crémaillère de direction d'un véhicule automobile, qui utilise une telle butée.

Un mécanisme de direction de véhicule automobile est conçu et réalisé pour permettre un certain rayon de braquage du véhicule. Plus précisément, la course de la crémaillère de direction est définie en tenant compte des contraintes d'environnement du passage de roue et des roues à monter sur le véhicule. Une fois cette définition faite, la crémaillère ne peut prendre en compte que les largeurs de roues spécifiées lors de sa conception, ce qui confère au véhicule une caractéristique « négative » du fait même de la difficulté de monter ultérieurement des roues plus larges.

Il y a nécessité, de façon à rendre possible le montage par exemple d'une roue spéciale, plus large, ou d'une roue accessoire, de pouvoir modifier la définition évoquée ci-dessus de la course de la crémaillère.

On connaît déjà des mécanismes limiteurs de la direction, à savoir des mécanismes réglables des butées de direction d'un véhicule. A titre d'exemple, le document FR 2 591 552 décrit un mécanisme de ce type dans un ensemble d'essieu comprenant un carter, un joint de direction couplé au carter et un mécanisme d'arrêt de direction. Le joint de direction comprend une fusée de direction pivotant sur un arc. Le mécanisme d'arrêt de direction comprend un moyen d'arrêt sur le carter. Le mécanisme d'arrêt de direction, réglable, définit un organe allongé, de préférence en bout d'arbre cylindrique, sélectivement fixé à la fusée de direction. L'une des extrémités de cet organe est disposée pour entrer en contact avec le moyen d'arrêt. De plus, cet organe présente un moyen pour sa fixation rigide dans un nombre défini de positions sélectives le long de l'organe. Le moyen d'arrêt est efficace pour limiter l'angle du mouvement pivotant de la fusée relativement au carter de l'essieu.

Les documents US-A-6 257 602 et DE-A-100 45 820 divulguent des systèmes pour réduire l'angle de direction d'une direction à crémaillère.

Le but de la présente invention est de fournir une butée de limitation de course de la crémaillère de direction d'un véhicule automobile, qui puisse être facilement montée en post-équipement sur le véhicule de façon à permettre le montage de roues de plus grande largeur.

Un autre but de la présente invention est de fournir une telle butée, qui soit de conception et de réalisation simples, qui soit fiable et économique.

Pour parvenir à ces buts, la présente invention a pour objet une nouvelle butée de limitation de course de la crémaillère de direction d'un véhicule automobile, destinée à venir se placer dans un logement formé par un épaulement interne du carter de direction et limiter, ainsi, la course de la crémaillère représentée par la distance entre ledit épaulement et la rotule de direction. Cette butée nouvelle présente la forme générale d'une rondelle de circonférence incomplète, sensiblement plane, avec une ouverture dite « ouverture de montage » de largeur suffisante pour permettre le montage par simple translation de ladite butée sur la crémaillère, la butée étant ensuite mise en place dans son logement par la rotule suivant le mouvement de translation de la crémaillère.

Selon le mode préféré de réalisation de l'invention, cette butée comporte une partie de sa circonférence formant une zone de déformation programmée, qui permet l'adaptation de la butée au diamètre dudit logement formé par un épaulement interne du carter de direction.

Selon le mode préféré de réalisation de l'invention également, cette zone de déformation programmée est avantageusement constituée par une diminution de la largeur radiale de la rondelle dans ladite zone de déformation. Selon le mode préféré de réalisation de l'invention encore, cette zone de déformation programmée est avantageusement située dans la partie de la circonférence de la butée, qui est opposée à l'ouverture de montage.

La butée selon l'invention peut être réalisée en métal, ou bien en matière plastique.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, les principaux éléments d'une direction assistée de véhicule automobile,
- la figure 2 est une vue en coupe partielle du boîtier de direction de la direction assistée de la figure 1,
- la figure 3 est une vue en coupe, détaillée, de l'environnement de la butée de limitation de course de la crémaillère de direction,
- la figure 4 est une vue en perspective d'une butée de limitation de course de crémaillère de direction, selon la présente invention, et
- la figure 5 est une variante de réalisation de la butée de limitation de course de la figure 4.

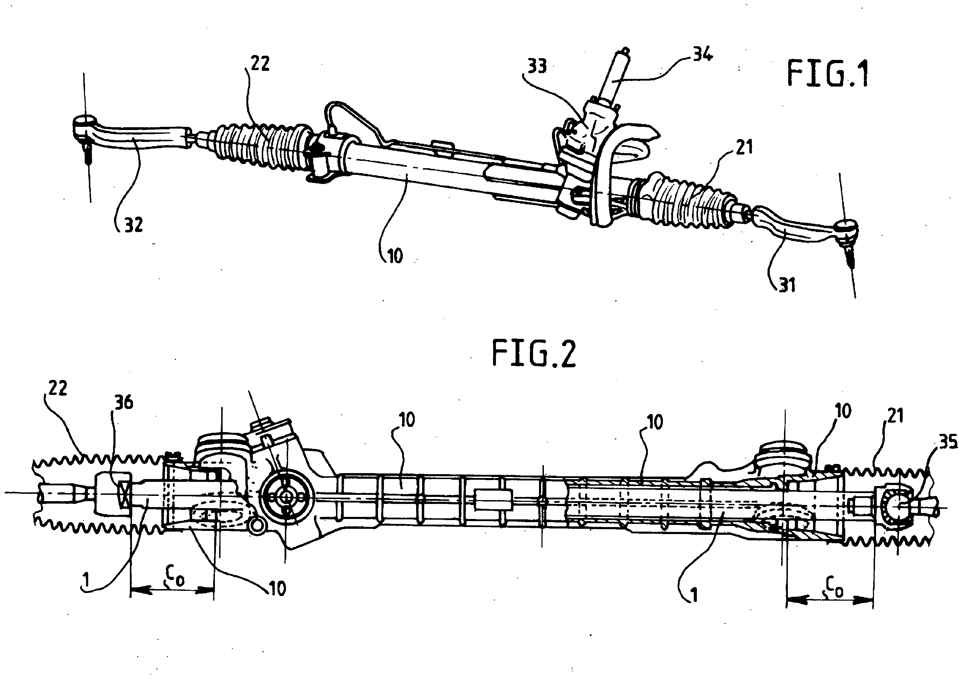

En référence au dessin de la figure 1, on a représenté, de manière schématique, les principaux éléments d'un système de direction assistée de véhicule automobile, qui permet d'orienter le véhicule dans la direction souhaitée. De manière classique, un tel système comporte un volant circulaire (non représenté) permettant aux mains du conducteur d'appliquer un couple sur le système de direction. La transmission du mouvement imprimé par le conducteur se fait sur la colonne de direction, représentée très partiellement et désignée 34. La colonne de direction 34 transmet le couple aux biellettes de direction 31 et 32 agissant directement sur les roues, et ce par l'intermédiaire d'un boîtier de direction de type pignon s'engrenant sur une crémaillère. De manière classique également, une assistance, hydraulique ou électrique, est associée au système de direction pour permettre au conducteur de ne pas avoir à fournir d'effort important sur le volant. La référence 33 désigne la valve rotative.

Comme montré sur le dessin de la figure 2, la crémaillère, de référence générale 1, est enfermée dans un carter de direction, de référence générale 10, boulonné perpendiculairement à l'axe longitudinal du véhicule, au milieu du châssis, entre les roues avant, et légèrement à l'arrière de celles-ci. La crémaillère 1 sort du carter 10 à ses deux extrémités reliées aux rotules de direction 35 et 36, respectivement. Ces extrémités sont protégées, ainsi que les rotules, par les soufflets de direction 21 et 22.

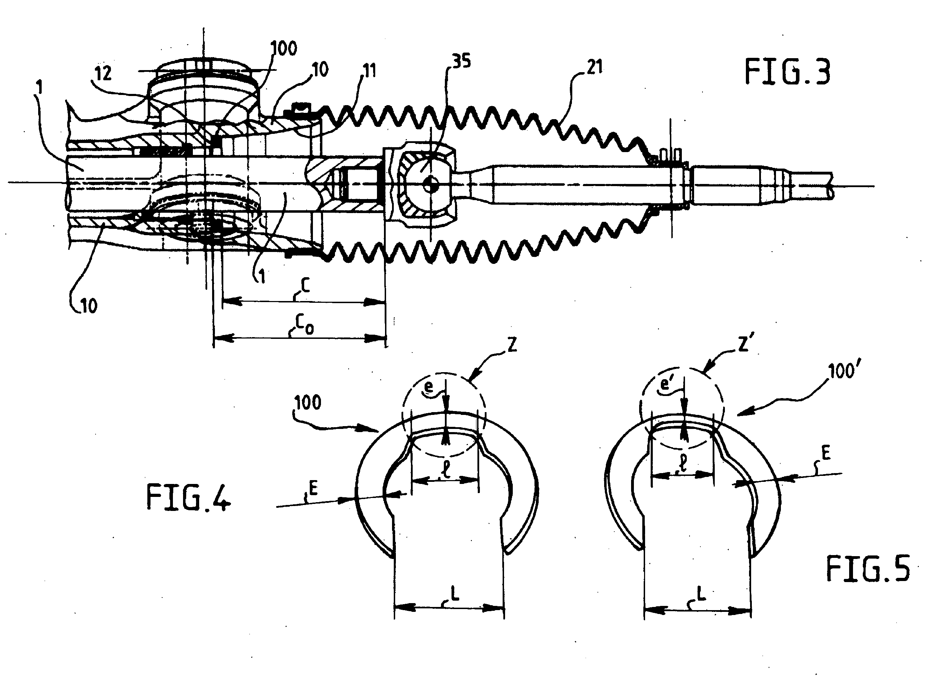

Le système de direction est défini pour permettre un rayon de braquage donné des roues du véhicule, et ce rayon de braquage donné est lui-même défini par la course C₀ de la crémaillère, à savoir la distance entre l'épaulement interne 12 (figure 3) du carter de direction 10 formant butée du mouvement axial de la rotule 35. La même course C₀ se retrouve à l'autre extrémité de la crémaillère 1 en regard de la rotule 36.

Cette définition C₀ de la course de la crémaillère prend en compte les différentes contraintes d'environnement, notamment celles relatives aux passages de roues.

Comme déjà mentionné précédemment, l'objectif est de pouvoir monter, en post équipement notamment, une butée de limitation de la course de la crémaillère 1 de direction sur le véhicule pour permettre le montage de roues de largeur plus importante, par conséquent de modifier en la limitant la course C₀ de la crémaillère.

Selon le principe de la présente invention, le montage de la butée de limitation de course peut être effectué de manière très simple en ne déposant que la roue et le soufflet de direction correspondant.

La butée selon l'invention, de référence générale 100 sur le dessin de la figure 4, réalisée en métal ou en matière plastique, présente la forme générale d'une rondelle de circonférence incomplète, sensiblement plane, de largeur radiale « E ». Cette butée 100 comporte une ouverture dite « ouverture de montage » de largeur « L » suffisante pour permettre le montage par simple translation - ou « chaussage » - de la butée 100 sur la crémaillère 1. La butée, ainsi placée sur la crémaillère 1, est ensuite mise en place dans l'épaulement interne 12 (voir figure 3) du carter de direction 10 par la rotule 35 suivant le mouvement de translation de la crémaillère 1.

La largeur « L » de l'ouverture de montage est, par conséquent, au moins égale au diamètre de la crémaillère 1. Elle est, de préférence, très légèrement supérieure à ce diamètre.

De manière à faciliter la mise en place de la butée dans son logement contre l'épaulement interne 12, l'entrée du carter 10 présente une surface interne 11 tronconique à diamètre décroissant vers l'épaulement 12.

Selon le principe de la présente invention également, la butée 100 comporte une partie de sa circonférence, de largeur « l », opposée à l'ouverture de montage de largeur « L », dans laquelle la largeur radiale « e » est plus faible (e < E). Cette partie, désignée « Z » sur le dessin de la figure 4, forme une zone dite « de déformation programmée », qui permet l'adaptation géométrique de ladite butée 100 au diamètre du logement formé par l'épaulement interne 12 du carter de direction 10.

La figure 5 représente une variante de réalisation de la butée de limitation de course de la figure 4, selon laquelle la butée 100' présente une zone de déformation programmée « Z' » de plus petite largeur « e' » que celle de la zone de déformation « Z » de la butée 100.

De manière générale, il convient de noter que les dimensions de la zone de déformation programmée Z ou Z', à savoir la longueur « l » de la zone et la largeur radiale « e » ou « e' », sont définies en fonction de la limitation de course à apporter, de la matière de la butée, des tolérances de fabrication du carter. On notera également que l'on évitera une brusque variation de section de la circonférence de la butée, notamment dans la partie de raccordement entre la zone de déformation programmée et le reste de circonférence de la butée, de façon à limiter les risques d'affaiblissement de la résistance mécanique de la butée.

La butée selon l'invention, décrite ci-dessus selon deux modes de réalisation, permet de réaliser dans l'usine de fabrication automobile des séries spéciales de véhicules comportant des roues équipées de pneumatiques plus larges qui donnent un réel attrait visuel aux véhicules. Cette butée selon l'invention permet aussi la vente et le montage en atelier après-vente de roues accessoires présentant un « design » plus attractif.

Le montage de la butée est simple. Il comporte les étapes suivantes :
- a) dépose d'une première des deux roues reliées à la crémaillère 1,
- b) dépose du soufflet de transmission 21 ou 22 correspondant,
- c) mise en place, par son ouverture et par simple translation sur la crémaillère 1, d'une butée 100 (ou 100') conforme à celle décrite ci-dessus, et
- d) re-montage du soufflet de transmission 21 ou 22 et de la roue,
Les opérations a) à d) sont ensuite répétées pour l'autre roue de la direction.

La butée de l'invention présente l'avantage d'être de conception et de réalisation simples, d'être fiable et économique et surtout d'être de montage facile en post-équipement sur le véhicule, le montage d'une butée selon l'invention n'exigeant que le démontage préalable de la roue et du soufflet de direction correspondants.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Butée de limitation de course de la crémaillère de direction d'un véhicule automobile, destinée à venir se placer dans un logement formé par un épaulement interne (12) du carter de direction (10) et limiter, ainsi, la course (« C ») de la crémaillère (1) représentée par la distance entre ledit épaulement interne (12) et la rotule de direction (35), ladite butée étant **caractérisée en ce qu'**elle présente la forme générale d'une rondelle de circonférence incomplète, sensiblement plane, avec une ouverture dite « ouverture de montage » de largeur (« L ») suffisante pour permettre le montage par simple translation de ladite butée (100 ; 100') sur la crémaillère (1), la butée étant ensuite mise en place dans son logement par la rotule (35) suivant le mouvement de translation de la crémaillère (1).

2. Butée selon la revendication 1, **caractérisée en ce qu'**elle comporte une partie de sa circonférence formant une zone de déformation programmée (« Z »), qui permet l'adaptation de la butée (100 ; 100') au diamètre dudit logement formé par un épaulement interne (12) du carter de direction (10).

3. Butée selon la revendication 2, **caractérisée en ce que** ladite zone de déformation programmée (« Z ») est constituée par une diminution de la largeur radiale (« e », « e' ») de la rondelle formant butée.

4. Butée selon l'une quelconque des revendications 2 et 3, **caractérisée en ce que** ladite zone de déformation programmée (« Z ») est située dans la partie de sa circonférence opposée à l'ouverture de montage.

5. Butée selon l'une quelconque des revendications 1 à 4, **caractérisée en ce qu'**elle est réalisée en métal.

6. Butée selon l'une quelconque des revendications 1 à 4, **caractérisée en ce qu'**elle est réalisée en matière plastique.

## Patentansprüche

1. Endanschlag zur Begrenzung der Lenkungszahnstange eines Kraftfahrzeugs, der dazu bestimmt ist, sich in einer Aufnahme zu platzieren, die von einem inneren Ansatz (12) des Lenkungsgehäuses (10) gebildet wird, um so den Hub ("C") der Zahnstange (1) zu beschränken, der von der Entfernung zwischen dem inneren Ansatz (12) und dem Spurstangenkopf (35) dargestellt wird, wobei der Anschlag **dadurch gekennzeichnet ist, dass** er die allgemeine Form einer Scheibe mit unvollständigem Umfang aufweist, die im Wesentlichen flach ist, mit einer so genannten "Montageöffnung" mit Breite ("L"), die ausreicht, um die Montage durch einfache Verschiebung des Anschlags (100; 100') auf der Zahnstange (1) zu erlauben, wobei der Anschlag anschließend in seiner Aufnahme durch den Kopf (35) entlang der Verschiebungsbewegung der Zahnstange (1) angebracht wird.

2. Anschlag nach Anspruch 1, **dadurch gekennzeichnet, dass** er einen Teil seines Umfangs aufweist, der eine programmierte Verformungszone ("Z") bildet, die das Anpassen des Anschlags (100; 100') an den Durchmesser der Aufnahme, die durch einen inneren Ansatz (12) des Lenkungsgehäuse (10) ausgebildet ist, erlaubt.

3. Anschlag nach Anspruch 2, **dadurch gekennzeichnet, dass** die programmierte Verformungszone ("Z") aus einer Verringerung der radialen Breite ("e", "e'") der Scheibe, die den Anschlag bildet, besteht.

4. Anschlag nach einem der Ansprüche 2 und 3, **dadurch gekennzeichnet, dass** die programmierte Verformungszone ("Z") in dem Teil ihres Umfangs, der der Montageöffnung entgegengesetzt ist, liegt.

5. Anschlag nach einem der Ansprüche 1 bis 4, **dadurch gekennzeichnet, dass** er aus Metall hergestellt ist.

6. Anschlag nach einem der Ansprüche 1 bis 4, **dadurch gekennzeichnet, dass** er aus Kunststoff hergestellt ist.

## Claims

1. An end stop limiting the travel of the steering rack of a motor vehicle, intended to be positioned in a housing formed by an internal shoulder (12) of the steering box (10) and thus limit the travel ("C") of the rack (1) represented by the distance between the said internal shoulder (12) and the steering ball joint (35), the said stop being **characterized in that** it has the general shape of a washer with an incomplete circumference, which is substantially flat, with an opening, designated "mounting opening", having a sufficient width ("L") to permit mounting by simple translation of the said stop (100; 100') on the rack (1), the stop being then positioned in its housing by the ball joint (35) following the translation movement of the rack (1).

2. The stop according to claim 1, **characterized in that** it comprises a portion of its circumference forming a programmed deformation zone ("Z"), which permits the adaptation of the stop (100; 100') to the diameter of the said housing formed by an internal shoulder (12) of the steering box (10).

3. The stop according to claim 2, **characterized in that** the said programmed deformation zone ("Z") is constituted by a reduction of the radial width ("e", "e"') of the washer forming a stop.

4. The stop according to any one of claims 2 and 3, **characterized in that** the said programmed deformation zone ("Z") is situated in the portion of its circumference opposed to the mounting opening.

5. The stop according to any one of claims 1 to 4, **characterized in that** it is made of metal.

6. The stop according to any one of claims 1 to 4, **characterized in that** it is made of plastic material.
